# EUROPÄISCHE PATENTSCHRIFT

(11) **EP 0 717 094 B1**
(45) Veröffentlichungstag und Bekanntmachung des Hinweises auf die Patenterteilung: **21.07.1999**
(21) Anmeldenummer: 95250303.5
(22) Anmeldetag: 11.12.1995
(51) Int. Cl.: C10G 1/10

(54) **Verfahren zur Gewinnung von Hartparaffinen aus stark verunreinigten Pololefinabfällen**
Process for the recuperation of solid paraffins from highly polluted poyolefinic wastes
Procédé pour la récupération de paraffines solides à partir de déchets polyoléfiniques pollués

(30) Priorität: 13.12.1994 DE 4444209
(43) Veröffentlichungstag der Anmeldung: 19.06.1996
(73) Patentinhaber: BAUFELD-OEL GmbH, 80809 München (DE)
(72) Erfinder: Utzig, Johann, Dr., 06112 Halle (DE)
(74) Vertreter: Börner, Horst

(56) Entgegenhaltungen:
- EP-A- 0 577 279
- EP-A- 0 607 994
- DE-A- 4 344 848
- FR-A- 2 697 528
- US-A- 3 441 628

## Beschreibung

Die Erfindung betrifft ein Verfahren zur Gewinnung von Hartparaffinen aus stark verunreinigten Polyolefinabfällen, wie sie in allen Bereichen der Wirtschaft und im Rahmen der Erfassung von Kunststoffabfällen aus aushalten anfallen.

Hartparaffine werden nach dem bekannten Stand der Technik in wesentlichen aus bei der Erdölverarbeitung anfallenden Paraffingatschen gewonnen. Solche Paraffine bestehen überwiegend aus Gemischen von n- und iso-Alkanen, deren Verhältnis zueinander durch die Struktur des eingesetzten Erdöls bestimmt ist.

Angesichts ihrer Molekülstruktur bieten sich Polyolefinabfälle, wie sie im Gewerbebereich und in Haushalten anfallen, als preiswerter Rohstoff für die Gewinnung von Hartparaffinen an.

In den letzten Jahren sind weltweit eine Vielzahl von Möglichkeiten untersucht worden, die in der Industrie und in Haushalten anfallenden nicht mehr werkstofflich verwertbaren Kunststoffabfälle ohne 3elastung der Umwelt umfassend einer Wiederverwendung zuzuführen. Neben der energetischen Verwertung dieser Abfälle durch Pyrolyseverfahren sind Verfahren zur Aufarbeitung thermoplastischer Kunststoffabfälle zu vorwiegend gasförmigen und flüssigen Kohlenwasserstoffen bekannt geworden. Diese Verfahren sind in der Regel auf der Grundlage der Sumpfphasenhydrierung aufgebaut. Dabei werden die zerkleinerten Kunststoffabfälle in der Sumpfphase mit katalytisch wirkenden Feststoffen angemaischt, bei erhöhten Drücken und Temperaturen bis zur Verflüssigung der Kunststoffabfälle vorhydriert und anschließend nach Abtrennung der in den flüssigen Sunpfprodukt enthaltenen Feststoffe einen ein- oder nehrstufigen katalytischen Hydrierprozeß unterzogen und auf diese Weise zu flüssigen und gasförmigen Kohlenwasserstoffen weiterverarbeitet. Diese Verfahren ermöglichen zwar eine unweltschonende Beseitigung thermoplastischer Kunststoffabfälle, sie erfordern jedoch einen hohen technischen Aufwand und sind aus diesen Grunde außerordentlich kostenaufwendig.

Es hat auch nicht an Versuchen gefehlt, sortenreine Polyolefinabfälle schonend aufzuarbeiten. Dazu wird in der DE-PS 3037829 ein Verfahren beschrieben, mit den die Erstellung nodifizierter Peche und niedrigsiedender Aromaten oder Olefine durch thermische Behandlung von Kunststoffabfällen in Gegenwart hochsiedender Aromaten in der Weise erfolgt, daß die Polyolefine bei Temperaturen oberhalb ihres Zersetzungspunktes und Drücken bis zu 830 bar mit bis zu 90 Gew.-Teilen über 300 °C siedenden aronatischen Kohlenwasserstoffgemischen unter Inertgasatnosphäre thermisch behandelt werden.

Ein wesentlicher Nachteil der bekannten Verfahren ist, daß sie hinsichtlich der nach ihnen gewinnbaren Produkte wenig flexibel sind. Sie verfügen nur über enge Spielräume zur Variation des Verhältnisses von festen zu flüssigen bzw. zu gasförnigen Spaltprodukten. So werden durch das in der Regel erforderliche Aufheizen des flüssigen Reaktionsmediums auf Cracktemperaturen deutlich über 400 °C oder durch Cracken in der Gasphase überwiegend flüssige und gasförmige Produkte gewonnen, deren Anwendungsbereiche entsprechend eingegrenzt sind. Die Gewinnung hochschmelzender, fester Spaltprodukte kann mit den herkömmlichen Verfahren nur sehr begrenzt erreicht werden.

In der DD-PS 300172 wird ein Verfahren beschrieben, Polyethylene durch oxidativen thermischen Abbau zu wachsartigen Produkten umzuwandeln. Die dabei erhaltenen Wachsoxidate können auf Grund ihrer guten Emulgierbarkeit vorteilhaft zu Herstellung von Selbstglanzwachsen, Poliermitteln u.a. verwendet werden. Andere Verfahren führen unter Zugabe von Sauerstoff oder in Gegenwart katalytisch wirkender Substanzen zu kürzerkettigen Spaltprodukten mit wachs- oder kunststoffartigen Eigenschaften.

Die schonende thermische Spaltung von Polyethylen ohne Sauerstoffzusatz führt zun Abbau der hochmolekularen Verbindungen in niedermolekulare. In der DE-0S 1645609 wird ein Verfahren beschrieben, bei dem ein thermischer Abbau von Polyethylen in einer Schmelze bei Temperaturen von 300 bis 600 °C erfolgt, wobei niedermolekulare Polyethylenwachse erhalten werden, die zur Herstellung von Selbstglanzemulsionen, Bohnermassen u.a. geeignet sind.

Die nach dem Stand der Technik bekannten Verfahren beinhalten entweder die vollständige Zersetzung der eingesetzten Kunststoffe bzw. der Kunststoffabfälle bis zur Verflüssigung oder aber eine schonende Spaltung von reinen Polyethylenen zur Herstellung der in der Darstellung des Standes der Technik genannten Wachskomponenten. Dabei gehen alle nach dem Stand der Technik bekannten Verfahren zur Herstellung fester, wachsartiger Abbauprodukte von sortenreinen Polyethylenen bzw. Polyethylenabfällen aus.

Komplikationen ergeben sich bei der Anwendung der nach dem Stand der Technik bekannten Verfahren, wenn Polyolefinabfälle mit unterschiedlichen Verunreinigungen, wie nichtpolyolefinische Kunststoffe, Pflanzenschutzmittel- und andere Chemikalienreste, Aluminium, Gummi, Etikettenreste u.a., zu vorwiegend langkettigen Kohlenwasserstoffen des Hartparaffinbereiches aufgearbeitet werden sollen. Es sind zwar eine Vielzahl von Verfahren bekannt, mit denen im Rahmen der zersetzenden Behandlung solcher verunreinigter Polyolefinabfälle die anhaftenden Verunreinigungen schadstoffarm beseitigt werden können, jedoch werden mit diesen Verfahren feste Kohlenwasserstoffe als Zielprodukt nicht erhalten. In der Regel arbeiten solche Verfahren entweder bei Temperaturen, die bei starker Koksbildung vorwiegend zu flüssigen und gasförmigen Spaltprodukten führen, oder aber solche, bei denen nach der Stufe der thermischen Behandlung eine kostspielige Wasserstoffbehandlung nachgeschaltet ist.

In der DE-OS 4311034 ist ein Verfahren beschrieben, mit den aus einem Gemisch aus Kunststoffabfällen und Polyvinylchloridabfällen neben einem Kondensat und einem Prozeßgas eine Schmelze hergestellt wird, die durch nachfolgende katalytische Wasserstoffbehandlung, Druckvergasung oder Pyrolyse zu Chemierohstoffen weiterverarbeitet werden kann.

In den DE-OS 4114434, 4236913 und 4300860 werden Verfahren zur thernischen Behandlung synthetischer organischer Abfälle mit dem Ziel der Herstellung einer punpbaren Schmelze im Zusammenhang nit der nachfolgenden hydrierenden Spaltung dieser Abfälle zu Kohlenwasserstoffen beschrieben, insbesondere solchen im Benzin- und Mittelölbereich. Ziel dieser Verfahren ist eine möglichst vollständige Vermeidung der Koksbildung infolge der in den Kunststoffabfällen enthaltenen koksbildenden Anteile, insbesondere Polyvinylchloridanteilen.

Mit diesen Verfahren ist zwar eine umweltschonende Entsorgung von in den Kunststoffabfällen enthaltenen Verunreinigungen möglich, die wirtschaftliche Herstellung von Hartparaffinen als Zielprodukt aus solchen Abfällen jedoch nicht.

Der Erfindung liegt die Aufgabe zugrunde, ein Verfahren zu entwickeln, mit dem aus stark verunreinigten Polyolefinabfällen vorwiegend Hartparaffine gewonnen werden, die in vielen Bereichen der Wirtschaft eingesetzt werden können. Dabei sollen Polyolefinabfälle zum Einsatz kommen, die sowohl in Industrie und Gewerbe als auch bei der Erfassung von Kunststoffabfällen aus aushalten anfallen und unterschiedliche Verunreinigungen, wie Frendkunststoffe, Reste von Chemikalien und Pflanzenschutzmittel, Aluminium, Gummi, Etikettenreste u.a. enthalten.

Erfindungsgemäß wird die Aufgabe durch ein Verfahren gelöst, bei dem zerkleinerte Polyolefinabfälle mit bis zu 15 Ma.-% Fremdbestandteilen in einer ersten Verfahrensstufe durch Erhitzen unter Sauerstoffabschluß bei Temperaturen von 360 bis 400 °C und gleichzeitiger Entfernung der dabei entstehenden flüchtigen Anteile angecrackt und in einer zweiten Verfahrensstufe einer Nachspaltung durch thermische 3ehandlung bei 400 bis 450 °C unter gleichzeitiger destillativer Entfernung der entstehenden Spaltprodukte bei Drücken im Bereich 1 bis 100 Millibar unterworfen werden. Dabei werden die unter den Bedingungen der destillativen Nachspaltung nicht flüchtigen Bestandteile im Crackrückstand angereichert und mit diesem aus dem Prozeß ausgeschieden. In einer dritten Verfahrensstufe wird das Crackdestillat direkt oder nach Abtrennung der bis 160 °C - bezogen auf einen Druck von 10 Millibar- siedenden Anteile einer herkömmlichen Selektiventölung zur Gewinnung des gebildeten Hartparaffinanteils unterzogen.

Nach einem weiteren Merkmal der Erfindung hat es sich als vorteilhaft erwiesen, die in der ersten Verfahrensstufe hergestellte flüssige Phase zur Entfernung der flüchtigen Anteile 15 bis 30 Minuten unter intensiver Durchmischung bei Temperaturen im Bereich von 300 bis 400 °C zu behandeln.

Die in den Polyolefinabfällen enthaltenen Fremdbestandteile können nach weiteren Merkmalen der Erfindung vollständig oder teilweise aus nichtpolyolefinischen Kunststoffen, vollständig oder teilweise aus Polyvinylchlorid und bzw. oder aus durch Verpackungsmittelabfälle eingebrachten Fremdbestandteilen aus Resten der ehemaligen Füllgüter bestehen. Fremdbestandteile können auch Metallreste und bzw. oder anorganische Pigmente und bzw. oder mechanische Verunreinigungen sein.

Das erfindungsgemäß vorgeschlagene Verfahren gestattet eine kostengünstige Herstellung von in vielen Bereichen der Wirtschaft einsetzbaren Hartparaffinen mit Ausbeuten von 30 bis 65 Ma.-% bezogen auf den Polyolefinanteil der verunreinigten Polyolefinabfälle, wie sie in ständig größerem Umfang anfallen und nach dem derzeitigen Stand der Technik entweder deponiert oder einer energetischen Nutzung zugeführt werden oder nur durch technologisch aufwendige Verfahren zu in der Mineralölindustrie einsetzbaren Produkten aufgarbeitet werden können.

Bei der Anwendung des erfindungsgemäßen Verfahrens werden Fremdbestandteile, die unter den Bedingungen der ersten Verfahrensstufe thermisch instabil sind, in dieser Stufe zerstört und solche, die unter den Bedingungen der ersten Verfahrensstufe flüchtig sind, insbesondere anhaftende Produktreste an zerkleinerten Emballagen, sowie flüchtige Abbauprodukte der Fremdbestandteile in dieser Verfahrensstufe ausgetrieben und entfernt. Fremdbestandteile und enstandene hochsiedende Abbauprodukte von Frendbestandteilen, die unter den Bedingungen der zweiten Verfahrensstufe nicht flüchtig sind, werden mit dem Crackrückstand aus dem Prozeß ausgeschleust. Frendbestandteile, die in den beiden ersten Verfahrensstufen nicht entfernt bzw. bei der destillativen Fraktionierung des Crackdestillates nicht mit der Vorlauffraktion abgetrennt werden, werden, sofern sie im selektiven Lösungsmittel löslich sind, durch dieses herausgelöst, wodurch im Ergebnis des erfindungsgemäßen Verfahrens Hartparaffine mit einem hohen Reinheitsgrad erhalten werden.

De Erfindung soll an drei Ausführungsbeispielen näher erläutert werden.

### Beispiel 1:

In eine mit einem Rührwerk und einer nachgeschalteten Absorptionsanlage für HCl versehene 2 Liter-Destillationsapparatur werden unter Sauerstoffabschluß 200 g eines Gemisches aus 90 Ma.-% zerkleinerten Polyolefinabfällen und 10 Ma.-% zerkleinerten PVC-Abfällen eingefüllt und auf 380 °C erhitzt. Die Beheizung des Kolbens erfolgt mit einer auf 500 °C eingestellten elektrischen Heizvorrichtung. Durch einen Seitenhals des Kolbens werden im Abstand von ca. 15 bis 20 Minuten je 100 g der Abfallmischung hinzugegeben, bis insgesamt 900 g in den Kolben eingefüllt sind. Die Temperatur des Kolbeninhaltes wird bei 380 °C gehalten. Die nach jeder Zugabe entstehenden HCl-Gase werden in der nachgeschalteten, mit Kalilauge befüllten Absorptionsanlage absorbiert. 30 Minuten nach Zugabe der letzten Portion wird der Prozeß beendet. Es ist eine niedrigviskose bei ca. 100 °C erstarrende, durch koksähnliche Abscheidungen dunkel gefärbte Schmelze mit einem Chlorgehalt von 0,1 Ma.-% entstanden.

Von dieser Schmelze werden 500 g in eine bei 10 Millibar arbeitende Vakuumdestillationsanlage gefüllt und bei auf 430 °C ansteigenden Sumpftemperaturen einer spaltenden Destillation unterworfen. Das dabei gewonnene Crackdestillat, dessen Chlorgehalt 0,03 Ma.-% beträgt, wird im Vakuum destillativ in eine bei 8 Millibar bis 180 °C siedende Ölfraktion und eine bei diesem Druck zwischen 160 und 340 °C siedende Paraffinfraktion sowie einen Destillationsrückstand aufgetrennt.

Die Ausbeute an der bei 58 °C erstarrenden Paraffinfraktion beträgt - bezogen auf das eingesetzte Abfallgemisch - ca. 60 Ma.-%. Diese Paraffinfraktion wird einer zweistufigen Entölung mit einem Aceton-Toluolgemisch (50 : 50 Volumenteile) bei - 5 °C unterworfen. Nach Abtrennung des Lösungsmittels aus dem Filterkuchen wird ein wachsartiges Paraffin mit einem Erstarrungspunkt von 64 °C und einem Ölgehalt von 1 Ma.-% gewonnen. Bezogen auf das eingesetzte Polyolefin-PVC-Gemisch liegt die Paraffinausbeute bei ca. 35 Ma.-%.

### Beispiel 2:

Als Einsatzprodukt für die Durchführung des erfindungsgemäßen Verfahrens wird ein Splittergranulat verwendet, das in einem Entsorgerbetrieb durch Zerkleinerung gewaschener Pflanzenschutzmittelkanister, die überwiegend aus PE-HD bestanden, hergestellt worden war. Eine entsprechende analytische Untersuchung ergab, daß diesem Material unter anderem folgende Pflanzenschutzmittel anhaften:

| Schadstoff | Konzentration mg/kg |
|---|---|
| Organochlorpestizide | 3,75 |
| Organophosphorpestizide | 0,15 |
| Triazine | 0,5 |
| Phenoxyalkancarbonsäuren | 11,8 |

Die Aufarbeitung dieses Materials erfolgt analog Beispiel 1. Die in der ersten Verfahrensstufe hergestellte Schmelze weist keinerlei Geruch nach Pflanzenschutzmitteln auf und hat einen Erstarrungspunkt von ca. 115 °C. Aus dieser Schmelze wird über eine degradative Destillation nach Beispiel 1 und nach Fraktionierung des Crackdestillates eine im Bereich 160 bis 380 °C siedende Paraffinfraktion mit einem Erstarrungspunkt von 72°C - bei einer Ausbeute von 70 Ma.-% der eingesetzten Abfälle - hergestellt. Die Selektiventölung dieser Paraffinfraktion führt mit einer Ausbeute von ca. 55 Ma.-% (bezogen auf die eingesetzten Abfälle) zu einem wachsartigen Paraffin mit einem Erstarrungspunkt von 71 °C. Ein Pestizid-Screening auf 102 PSM ergab, daß keines der geprüften PSM im Paraffin nachgewiesen werden konnte.

### Beispiel 3:

Als Ausgangsprodukt für die Durchführung des erfindungsgemäßen Verfahrens werden bei diesem Beispiel zu Splittergranulat zerkleinerte, ungewaschene Kunststoffverpackungen aus der Erfassung von Gewerbe- und Industriegebinden eingesetzt. Die Abfälle enthalten neben einer ganzen Reihe von Pflanzenschutzmittel- und sonstigen Chemikalienresten nichtpolyolefinische Kunststoffe, wie Polyethylenterephthalat und Polyamid (PE/PA-Co-Extrudate). Weiterhin enthalten diese Abfälle geringe Anteile an Aluminium, Gummi, Etikettenresten und sonstigen nicht näher definierten Bestandteilen. Eine zur Charakterisierung des Materials durchgeführte Auftrennung nach dem spezifischen Gewicht (Schwimm-Sink-Methode unter Verwendung von Wasser) ergab einen Anteil von etwa 1 Ma.-% an Stoffen mit einem spezifischen Gewicht über 1, darunter ca. 0,1 Ma.-% Gummi.

Dieses heterogene Ausgangsmaterial wird im angelieferten Zustand in die erste Verfahrensstufe nach Beispiel eingebracht und auf 390 °C aufgeheizt. Ab etwa 380 °C ist eine deutliche Abspaltung gasförmiger Reaktionsprodukte zu verzeichnen. Es wird eine bei 120 °C erstarrende Schmelze mit intensivem Geruch nach Gummiabbauprodukten gewonnen. Diese Schmelze wird analog Beispiel 1 über Crackdestillation und Fraktionierung mit einer Ausbeute von ca. 60 Ma.-% (bezogen auf eingesetzte Abfälle) in eine bei 68 °C erstarrende Paraffinfraktion umgewandelt, die noch einen deutlichen und unangenehmen Geruch aufweist. Die anschließende Selektiventölung führt zu einem nahezu geruchlosen, wachsartigen Paraffin mit einem Erstarrungspunkt von 71 °C. Die auf die eingesetzten Abfälle bezogene Paraffinausbeute beträgt ca. 42 Ma.-%. Die destillative Auftrennung des Filtrates aus der Selektiventölung führt zu einem mit deutlichem Geruch behafteten Öl. Das überdestillierende Aceton-Toluolgemisch weist dagegen keinerlei Geruch nach Fremdbestandteilen auf.

## Patentansprüche

1. Verfahren zur Gewinnung von Hartparaffinen aus stark verunreinigten Polyolefinabfällen, dadurch gekennzeichnet, daß zerkleinerte Polyolefinabfälle mit Fremdbestandteilen bis zu 15 Ma.-% in einer ersten Verfahrensstufe durch Erhitzen unter Sauerstoffabschluß bei 360 bis 400 °C 10 bis 30 Minuten unter gleichzeitiger Entfernung der entstehenden flüchtigen Anteile angecrackt, in einer zweiten Verfahrensstufe einer Nachspaltung in Form einer thermischen Behandlung bei 400 bis 450 °C unter gleichzeitiger destillativer Entfernung der entstehenden Spaltprodukte bei Drücken im Bereich von 1 bis 100 Millibar und unter Anreicherung der unter diesen Bedingungen nicht flüchtigen Bestandteile im Crackrückstand unterworfen werden und das Crackdestillat direkt oder nach Abtrennung der bis etwa 160 °C - bezogen auf einen Druck von 10 Millibar - siedenden Anteile in einer dritten Verfahrensstufe einer herkömmlichen Selektiventölung unterzogen wird.

2. Verfahren nach Anspruch 1, dadurch gekennzeichnet, daß die in der ersten Verfahrensstufe hergestellte flüssige Phase zur Entfernung der entstandenen flüchtigen Anteile 15 bis 30 Minuten unter intensiver Durchmischung bei Temperaturen im Bereich von 300 bis 400 °C behandelt wird.

3. Verfahren nach Anspruch 1 und 2, dadurch gekennzeichnet, daß die Fremdbestandteile vollständig oder teilweise aus nichtpolyolefinischen Kunststoffen bestehen.

4. Verfahren nach Anspruch 1 bis 3, dadurch gekennzeichnet, daß die Fremdbestandteile vollständig oder teilweise aus PVC bestehen.

5. Verfahren nach Anspruch 1 bis 4, dadurch gekennzeichnet, daß durch Verpackungsmittel eingebrachte Fremdbestandteile aus Resten der ehemaligen Füllgüter bestehen.

6. Verfahren nach Anspruch 1 bis 4, dadurch gekennzeichnet, daß Fremdbestandteile aus Metallresten und bzw. oder anorganischen Pigmenten und bzw. oder mechanischen Verunreinigungen der Abfälle bestehen.

## Claims

1. A process for obtaining hard paraffins from severely contaminated polyolefin wastes, characterized in that ground polyolefin wastes with up to 15% by weight foreign materials are cracked in the first step of the process by heating at 360 to 400 °C in the absence of oxygen for 10 to 30 minutes, with simultaneous removal of the volatile components produced, and in a second step of the process are subjected to a secondary breakdown in the form of a thermal treatment at 400 to 450 °C with simultaneous removal of the breakdown products formed by distillation at pressures in the range of 1 to 100 millibar, with the components that are not volatile under these conditions being concentrated in the cracking residue, and in the a third step of the process the distillate from cracking is subjected, directly or after separation of the portions boiling up to about 160 °C at a pressure of 10 millibar, to an ordinary selective oil removal.

2. A process according to Claim 1, characterized in that the liquid phase produced in the first step of the process is treated at temperatures in the range of 300 to 400 °C for 15 to 30 minutes with intensive mixing to remove the volatile components produced.

3. A process according to Claims 1 and 2, characterized in that the foreign materials consist partially or completely of non-polyolefinic plastics.

4. A process according to Claims 1 to 3, characterized in that the foreign materials consist partially or completely of PVC.

5. A process according to Claims 1 to 4, characterized in that the foreign materials introduced by packaging materials comprise residues of the former filler material.

6. A process according to Claims 1 to 4, characterized in that the foreign materials comprise metallic residues and/or inorganic pigments and/or mechanical contaminants of the wastes.

## Revendications

1. Procédé d'extraction de paraffines dures à partir de déchets de polyoléfines à forte teneur en impuretés, caractérisé en ce que les déchets de polyoléfines broyés, contenant jusqu'à 15 % de la matière de substances étrangères, sont craqués dans une première étape de procédé par chauffage en l'absence d'oxygène entre 360 et 400 °C pendant 10 à 30 minutes, sont à nouveau fractionnés au cours d'une deuxième étape de procédé par un traitement thermique entre 400 et 450 °C avec retrait par distillation simultanée des produits de fractionnement obtenus, sous une pression de l'ordre de 1 à 100 millibar et avec ajout des composants non volatils extraits dans des conditions aux résidus de craquage, et le distillat obtenu par craquage est soumis lors d'une troisième étape à un déshuilage sélectif ordinaire, directement ou après séparation des fractions dont le point d'ébullition est inférieur à 160 °C environ (à une pression de 10 millibar).

2. Procédé selon la revendication 1, caractérisé en ce que la phase liquide obtenue dans la première étape du procédé est traitée à des températures de 300 à 400 °C avec brassage intensif pendant 15 à 30 minutes en vue d'éliminer les fractions volatiles produites.

3. Procédé selon la revendication 1 ou 2, caractérisé en ce que les substances étrangères se composent en tout ou partie de matières plastiques non polyoléfiniques.

4. Procédé selon les revendications 1 à 3, caractérisé en ce que les substances étrangères se composent en tout ou partie de PVC.

5. Procédé selon les revendications 1 à 4, caractérisé en ce que les substances étrangères introduites par des matériaux d'emballage se composent de restes des anciens contenus.

6. Procédé selon les revendications 1 à 4, caractérisé en ce que les substances étrangères se composent de résidus métalliques et/ou de pigments anorganiques et/ou d'impuretés mécaniques présents dans les déchets.
